# EUROPÄISCHE PATENTSCHRIFT

(11) **EP 3 729 535 B1**
(45) Veröffentlichungstag und Bekanntmachung des Hinweises auf die Patenterteilung: **13.10.2021**
(21) Anmeldenummer: 18836814.6
(22) Anmeldetag: 19.12.2018
(51) Int. Cl.: H01M 10/6567, H01M 50/166, H01M 50/183, H01M 50/20, H01M 50/258

(54) **BATTERIEVORRICHTUNG FÜR EIN ELEKTRISCH ANGETRIEBENES FAHRZEUG**
BATTERY APPARATUS FOR AN ELECTRICALLY DRIVEN VEHICLE
DISPOSITIF DE BATTERIE POUR VÉHICULE À PROPULSION ÉLECTRIQUE

(30) Priorität: 20.12.2017 DE 102017223438
(43) Veröffentlichungstag der Anmeldung: 28.10.2020
(73) Patentinhaber: Lion Smart GmbH, 85748 Garching (DE)
(72) Erfinder: MAYER, Tobias, 80805 München (DE); BEHLEN, Christian, 83135 Schechen (DE)
(74) Vertreter: Patentanwälte Bals & Vogel
(86) Internationale Anmeldenummer: PCT/EP2018/085923
(87) Internationale Veröffentlichungsnummer: WO 2019/121970

(56) Entgegenhaltungen:
- EP-A1- 0 454 017
- EP-A1- 2 760 075
- EP-A1- 3 176 849
- DE-A1-102008 059 965
- DE-A1-102014 114 023
- DE-A1-102015 212 334
- DE-A1-102017 000 266

## Beschreibung

Die vorliegende Erfindung betrifft eine Batterievorrichtung für ein elektrisch angetriebenes Fahrzeug, ein Umgehäuse für eine solche Batterievorrichtung sowie ein Verfahren für die Montage einer solchen Batterievorrichtung.

Unter elektrisch angetriebenen Fahrzeugen sind im Sinne der vorliegenden Erfindung Fahrzeuge zu verstehen, welche eine Batterievorrichtung aufweisen können, um die darin gespeicherte elektrische Energie zumindest teilweise in Antriebskraft umzusetzen. Dabei kann es sich um rein elektrisch angetriebene Fahrzeuge handeln, aber auch um sogenannte Plug-in-Hybridfahrzeuge oder Fahrzeuge mit Range Extender. Um die Batterieleistung bzw. die elektrische Leistung für den Antrieb zur Verfügung zu stellen, muss die Batterievorrichtung in einem vorgegebenen Temperaturfenster gehalten werden. Zu tiefe Temperaturen oder zu hohe Temperaturen, welche in Abhängigkeit von der Außentemperatur oder durch ein Aufheizen bei der Nutzung der Batterievorrichtung entstehen können, können die Leistungsabgabe behindern oder sogar die Batterievorrichtung schädigen. Bei bekannten Batterievorrichtungen ist deshalb immer eine Temperiervorrichtung vorgesehen, welche mithilfe einer Temperierflüssigkeit zum Aufheizen der Batterievorrichtung Wärme in dieselbe eintragen kann oder zum Kühlen der Batterievorrichtung Wärme aus der Batterievorrichtung herausführen kann.

Nachteilhaft bei den bekannten Lösungen ist es, dass ein hoher Aufwand betrieben werden muss, um sicherzustellen, dass die Temperierflüssigkeit nicht in unerwünschter Weise aus der Batterievorrichtung austritt. Die Batterievorrichtung bekannter Lösungen ist üblicherweise in Form eines Batteriemoduls mit einer Vielzahl einzelner Batteriezellen ausgestattet. Üblicherweise sind mehrere solcher Batteriemodule nebeneinander oder übereinander zu der Batterievorrichtung verschaltet. Dies führt zu einer relativ komplexen Verschaltung für die Führung der Temperierflüssigkeit. Die einzelnen Abschnitte zwischen den Batteriezellen sowie die einzelnen Abschnitte zwischen Ebenen der Batteriemodule sowie zwischen benachbarten Batteriemodulen müssen für die Überführung der Temperierflüssigkeit abgedichtet werden gegen einen unerwünschten Austritt der Temperierflüssigkeit. Dies führt zum einen dazu, dass eine Vielzahl von Dichtmitteln an den entsprechenden Nahtstellen zwischen den einzelnen benachbarten Bauteilen eingesetzt werden muss. Zum anderen müssen die Gehäusebauteile der einzelnen Abschnitte besonders genau gefertigt werden, um im Zusammenspiel mit dem jeweiligen Dichtmittel eine hohe Anforderung an die Toleranzgenauigkeit zu erfüllen und damit die gewünschte Dichtleistung mit hoher Sicherheit gewährleisten zu können. Nicht zuletzt ist ein hoher Aufwand hinsichtlich der Genauigkeit und der Sicherheit bei der Montage solcher Batterievorrichtungen zwingend erforderlich, um die gewünschte Abdichtung gegen den Austritt von Temperierflüssigkeit gewährleisten zu können.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Abdichtung gegen den Austritt von Temperierflüssigkeit mit hoher Sicherheit gewährleisten zu können.

Die voranstehende Aufgabe wird gelöst durch eine Batterievorrichtung mit den Merkmalen des Anspruchs 1, ein Umgehäuse mit den Merkmalen des Anspruchs 11 sowie ein Verfahren mit den Merkmalen des Anspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Batterievorrichtung beschrieben sind, selbstverständlich auch im Zusammenhang mit dem erfindungsgemäßen Umgehäuse sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß ist eine Batterievorrichtung für ein elektrisch angetriebenes Fahrzeug ausgestaltet. Hierfür weist die Batterievorrichtung wenigstens ein Batteriemodul mit einer Mehrzahl von einzelnen Batteriezellen auf. Das Batteriemodul ist darüber hinaus mit einem Modulgehäuse ausgestattet, welches zur Temperierung der Batteriezellen zumindest teilweise mit Temperierflüssigkeit gefüllt ist. Bevorzugt ist eine vollständige oder im Wesentlichen vollständige Füllung des Modulgehäuses mit der Temperierflüssigkeit. Darüber hinaus weist das Modulgehäuse eine primäre Dichtvorrichtung gegen einen Austritt der Temperierflüssigkeit aus dem Modulgehäuse auf. Weiter ist das Batteriemodul in einem Modulraum eines Umgehäuses aufgenommen, welches eine sekundäre Dichtvorrichtung gegen einen Austritt von Temperierflüssigkeit aus dem Umgehäuse aufweist.

Ausgehend von den bekannten Lösungen der Batterievorrichtung ist nun hier ein zweistufiges bzw. zweiteilig abgesichertes Dichtsystem vorgegeben. Während bei bekannten Lösungen eine Vielzahl von einzelnen Dichtmitteln eine primäre Dichtvorrichtung an dem Modulgehäuse des Batteriemoduls zur Verfügung gestellt hat, ist nun erfindungsgemäß diese primäre Dichtvorrichtung durch eine sekundäre Dichtvorrichtung ergänzt worden. Die sekundäre Dichtvorrichtung kann dabei deutlich einfacher und kostengünstiger ausgestaltet sein, da sie nicht mehr an einer Vielzahl einzelner Nahtstellen bzw. Kontaktstellen zwischen einzelnen Batteriemodulen, zwischen einzelnen Ebenen eines Batteriemoduls und/oder zwischen einzelnen Batteriezellen zur Verfügung gestellt werden muss, sondern vielmehr ausschließlich eine Abdichtung eines einfachen geometrischen Umgehäuses zur Verfügung stellen muss.

Bei bekannten Lösungen war es notwendig, dass jede einzelne Nahtstelle mit hoher Sicherheit die gewünschte Dichtfunktionalität zur Verfügung stellt. Bei der erfindungsgemäßen Lösung wird nun beim Versagen einer einzelnen solchen Nahtstelle, also beim Versagen an einer Stelle der primären Dichtvorrichtung, ein Austritt von Temperierflüssigkeit in die Umgebung weiter wirksam verhindert, da durch eine einfache und kostengünstig zur Verfügung gestellte sekundäre Dichtvorrichtung des Umgehäuses ein solcher Austritt in die Umgebung aufgehalten wird. Das Umgehäuse dient also aus fluidtechnischer Sicht dem Auffangen der Temperierflüssigkeit beim Versagen der primären Dichtvorrichtung. Die sekundäre Dichtvorrichtung ist vorzugsweise nur dann im Einsatz, wenn die primäre Dichtvorrichtung ihre Wirkung nicht oder nicht vollständig erfüllt hat.

Durch das zweistufige Abdichtsystem einer erfindungsgemäßen Batterievorrichtung kann eine Vielzahl von Vorteilen erzielt werden. Zum einen wird die Sicherheit gegen den Austritt von Temperierflüssigkeit aus der Batterievorrichtung deutlich erhöht, da durch die sekundäre Dichtvorrichtung eine zusätzliche Barriere gegen einen solchen Austritt zur Verfügung gestellt wird. Darüber hinaus wird es möglich, die einzelnen Dichtmittel der primären Dichtvorrichtung einfacher und kostengünstiger zu gestalten bzw. den jeweiligen Montageschritt schneller und mit einem geringeren Sicherheitsaufwand gewährleisten zu können. Für den Fall, dass auf Basis der reduzierten Qualitätsanforderungen an die Dichtmittel der primären Dichtvorrichtung eine Leckage oder eine Teilleckage, zum Beispiel ein Austropfen von Temperierflüssigkeit in das Umgehäuse stattfindet, wird durch das Vorhandensein der sekundären Dichtvorrichtung ein unerwünschter Austritt einer solchen Temperierflüssigkeit in die Umgebung wirkungsvoll vermieden.

Dabei ist noch darauf hinzuweisen, dass nicht nur die primäre Dichtvorrichtung selbst, sondern auch die korrelierenden Dichtflächen und Gegen-Dichtflächen einfacher und kostengünstiger am Modulgehäuse zur Verfügung gestellt werden können. Dies beruht insbesondere auf der Tatsache, dass auf Basis der reduzierten Fertigungsanforderungen reduzierte Anforderungen an die Toleranzgenauigkeit der einzelnen Bauteile des Modulgehäuses notwendig sind. Neben einem reduzierten Fertigungsaufwand führt dies entsprechend auch zu reduzierten Fertigungskosten.

Die entsprechende Dichtungsvorrichtung kann dabei einzelne separate Bauteile, zum Beispiel separate Dichtmittel, genauso aufweisen, wie eine einheitliche und integrale Ausgestaltung mit der Struktur des jeweiligen Gehäuses.

Unter einer Temperierflüssigkeit ist im Sinne der vorliegenden Erfindung jede Flüssigkeit zu verstehen, welche in der Lage ist, Wärme in die Batterievorrichtung zu den Batteriemodulen hinein oder von den Batteriemodulen aus der Batterievorrichtung heraus zu transportieren. Die entsprechende Funktionalität ist dabei identisch mit bekannten Temperiervorrichtungen für bekannte Batterievorrichtungen.

Es kann von Vorteil sein, wenn bei einer erfindungsgemäßen Batterievorrichtung zwischen dem wenigstens einen Batteriemodul und einer Innenwandung des Umgehäuses ein Freiraum ausgebildet ist, welcher zumindest teilweise, insbesondere vollständig oder im Wesentlichen vollständig, mit einem Verdrängungsmaterial gefüllt ist. Üblicherweise ist das Umgehäuse größer als das darin aufgenommene Batteriemodul. Um ein einfaches und leichtes bzw. klemmfreies Einsetzen des wenigstens einen Batteriemoduls in den Modulraum gewährleisten zu können, ist üblicherweise ein Spielraum vorgesehen, welcher nach dem Einsetzen des wenigstens einen Batteriemoduls einen Freiraum zwischen dem Modulgehäuse und einer Innenwandung des Umgehäuses ausgebildet. Ein solcher Freiraum wird nun bei dieser Ausführungsform der vorliegenden Erfindung mit einem Verdrängungsmaterial gefüllt. Darunter ist zu verstehen, dass im Fall einer Leckage der primären Dichtvorrichtung das Verdrängungsmaterial den Freiraum und das dort sonst vorhandene freie Volumen ausfüllt und damit nicht mehr dem Auslaufen der Temperierflüssigkeit in einen solchen Freiraum zur Verfügung stellt. Mit anderen Worten verdrängt das Verdrängungsmaterial im Falle einer Leckage austretende Temperierflüssigkeit bzw. hindert sie direkt daran, in einen verringerten Freiraum im Umgehäuse eindringen zu können. Im Falle einer Leckage führt dies dazu, dass deutlich weniger Temperierflüssigkeit als beim Vorhandensein eines solchen Freiraums aus dem Modulgehäuse ausdringt. Je weniger Temperierflüssigkeit aus dem Modulgehäuse im Falle einer Leckage ausdringt, umso höher ist auch die Sicherheit, dass die Temperierfunktionalität innerhalb des Batteriemoduls weiter mit hoher Effizienz gegeben ist.

Bevorzugt ist es dabei, wenn der Freiraum minimiert wird, also das Verdrängungsmaterial den Freiraum vollständig oder im Wesentlichen vollständig ausfüllt.

Bei einer Ausführungsform gemäß dem voranstehenden Absatz bringt es Vorteile mit sich, wenn bei der Batterievorrichtung das Verdrängungsmaterial ein Schaummaterial aufweist, insbesondere mit zumindest teilweise geschlossenen Schaumporen. Ein Schaummaterial weist mehrere Vorteile auf. Zum einen kann ein Schaummaterial besonders einfach und kostengünstig in den Freiraum eingebracht werden. Bevorzugt wird eine schaumfähige Flüssigkeit eingebracht, welche nach dem Einbringen zum Beispiel durch Aktivierung oder chemische Reaktion aufschäumt. Damit wird der Freiraum wirkungsvoll durch das Schaummaterial als Verdrängungsmaterial geschlossen und insbesondere mit den Schaumporen in geschlossener Weise ausgefüllt. Die Verwendung eines Schaummaterials mit geschlossenen Schaumporen führt dazu, dass keine Temperierflüssigkeit im Falle einer Leckage in solche geschlossenen Schaumporen eindringen kann. Dadurch, dass solche Schaumporen in geschlossener Weise jedoch innen hohl ausgebildet sind, kann die Verwendung eines solchen Schaums eine Kombination einer hohen Verdrängungswirkung mit einer leichten Bauweise des Verdrängungsmaterials und damit mit einem geringen Gewicht der Batterievorrichtung ermöglichen.

Ebenfalls denkbar ist es, dass bei einer erfindungsgemäßen Batterievorrichtung das Verdrängungsmaterial eine Flüssigkeit aufweist, insbesondere die Temperierflüssigkeit. Selbstverständlich sind auch unterschiedliche Verdrängungsmaterialen einer einzelnen Batterievorrichtung miteinander kombinierbar. Die Verwendung der Temperierflüssigkeit als Verdrängungsmaterial erlaubt es, die Komplexität zu reduzieren, da kein zusätzliches Material für das Verdrängungsmaterial in dem Fertigungsprozess eingesetzt werden muss. Im Falle einer Leckage führt die Identität zwischen der Temperierflüssigkeit als Verdrängungsmaterial und der austretenden Temperierflüssigkeit dazu, dass mit absoluter Sicherheit chemische Reaktionen zwischen den Flüssigkeiten verhindert werden können. Dabei kann es vorteilhaft sein, wenn möglicherweise Rippen oder Strömungsstörer die Flüssigkeit als Verdrängungsmaterial festlegen und ein unerwünschtes Verschwimmen vermeiden. Auch das Einbringen einer Flüssigkeit ist besonders einfach und kostengünstig in den Freiraum möglich.

Weitere Vorteile kann es mit sich bringen, wenn bei einer erfindungsgemäßen Batterievorrichtung das Verdrängungsmaterial einen Feststoff aufweist, insbesondere in Form eines Schüttgutes. Ein Schüttgut kann dabei zum Beispiel ein rieselfähiger Feststoff sein, welcher auf diese Weise ebenfalls einfach und kostengünstig in den Freiraum eingebracht werden kann. Vorzugsweise kann ein solcher Feststoff ebenfalls Poren, zum Beispiel Poren in geschlossener Form, aufweisen, um bei einem geringen Eigengewicht eine hohe Verdrängungswirkung zur Verfügung zu stellen, wie dies bereits mit Bezug auf das Schaummaterial näher erläutert worden ist.

Ebenfalls von Vorteil kann es sein, wenn bei einer erfindungsgemäßen Batterievorrichtung das Umgehäuse wenigstens zweiteilig ausgebildet ist und einen Wannenabschnitt mit einem Verbindungsabschnitt sowie einen Deckelabschnitt mit einem Gegen-Verbindungsabschnitt aufweist. Dabei ist das wenigstens eine Batteriemodul in dem Wannenabschnitt aufgenommen und der Deckelabschnitt über seinen Gegen-Verbindungsabschnitt mit dem Verbindungsabschnitt flüssigkeitsdicht verbunden. Eine solche mehrteilige Ausgestaltung des Umgehäuses führt zu einfacher und kostengünstiger Herstellmöglichkeit. So können die einzelnen Bauteile des Umgehäuses einfach, zum Beispiel mithilfe eines Spritzgussverfahrens, insbesondere aus einem Kunststoffmaterial, gefertigt werden. Für die Montage kann der Wannenabschnitt direkt der Aufnahme des wenigstens einen Batteriemoduls dienen, so dass quasi eine Vorfixierung bzw. eine Vorpositionierung in dem noch zu schließenden Modulraum gewährleistet werden kann. Über das Abschließen des Modulraums mithilfe des Deckelabschnitts wird nicht nur eine mechanische Absicherung zur Verfügung gestellt, sondern gleichzeitig auch die flüssigkeitsdichte Verbindung zur Ausgestaltung der sekundären Dichtvorrichtung gewährleistet.

Bei einer Batterievorrichtung gemäß dem voranstehenden Absatz ist es von Vorteil, wenn der Wannenabschnitt eine Dichtfläche und der Deckelabschnitt eine Gegen-Dichtfläche aufweist, welche miteinander, insbesondere über ein separates Dichtmittel, in flüssigkeitsabdichtendem Kontakt stehen. Dies gewährleistet es, separat von der Verbindung zwischen Verbindungsabschnitt und Gegen-Verbindungsabschnitt die gewünschte Dichtfunktion der sekundären Dichtvorrichtung zur Verfügung stellen zu können. Insbesondere mithilfe eines separaten Dichtmittels kann in der Fertigung der einzelnen Bauteile des Umgehäuses eine geringere Toleranzanforderung ermöglicht werden.

Weiter von Vorteil ist es, wenn bei einer Batterievorrichtung der beiden voranstehenden Absätze der Verbindungsabschnitt mit dem Gegen-Verbindungabschnitt reversibel oder irreversibel verbunden ist. Eine solche Verbindung kann zum Beispiel durch Kleben, Schweißen oder irreversibles Verrasten zur Verfügung gestellt werden. Damit kann durch irreversibles, insbesondere flüssigkeitsdichtes Verbinden hier die Dichtfunktionalität der sekundären Dichtvorrichtung einfach, kostengünstig und insbesondere in Funktionsunion mit der Verbindungsfunktionalität zur Verfügung gestellt werden.

Ein weiterer Vorteil ist erzielbar, wenn bei einer erfindungsgemäßen Batterievorrichtung das Umgehäuse wenigstens einen Funktionsdurchgang aufweist für die Durchführung wenigstens eines Funktionsmittels in den Modulraum des Umgehäuses, insbesondere für wenigstens eines der folgenden Funktionsmittel:
- elektrische Verbindungsleitung zu dem wenigstens einen Batteriemodul
- Flüssigkeitsleitung für die Temperierflüssigkeit zu dem wenigstens einen Batteriemodul
- Datenleitung zu dem wenigstens einen Batteriemodul

Bei der voranstehenden Aufzählung handelt es sich um eine nicht abschließende Liste. Um die Funktionalität der Batterievorrichtung nicht zu beeinträchtigen, kann für einzelne Funktionszugänge der Funktionsdurchgang zur Verfügung gestellt sein. Um zu vermeiden, dass dieser eine Schwachstelle im Umgehäuse darstellt, ist der Funktionsdurchgang vorzugsweise ebenfalls mit der sekundären Dichtvorrichtung ausgestattet, so dass auch trotz der Durchführung von elektrischen Verbindungsleitungen, Flüssigkeitsleitungen, Datenleitungen oder ähnlichen Leitungen eine Abdichtung gegen den unerwünschten Austritt von Temperierflüssigkeit, aus dem Umgehäuse gegeben ist.

Weiter von Vorteil ist es, wenn bei einer erfindungsgemäßen Batterievorrichtung das Umgehäuse wenigstens abschnittsweise mechanisch stabil ausgebildet ist. Im Gegensatz zu einer ebenfalls grundsätzlich möglichen flexiblen und/oder elastischen, vorzugsweise hautartigen Ausgestaltung führt dies dazu, dass als zusätzliche Funktionalität auch eine mechanische Stabilisierung bzw. ein mechanischer Schutz der einzelnen Batteriemodule zur Verfügung gestellt werden kann. Dieser wird dadurch noch verstärkt, wenn eine entsprechende mechanische Dämpfungswirkung durch ein eingesetztes Verdrängungsmaterial zusätzlich eine Schutzfunktion für die Batteriemodule zur Verfügung stellt.

Ein weiterer Gegenstand der vorliegenden Erfindung ist ein Umgehäuse für eine erfindungsgemäße Batterievorrichtung, aufweisend eine Innenwandung, welche einen Modulraum zur Aufnahme wenigstens eines Batteriemoduls umgibt. Diese Innenwandung bzw. das Umgehäuse ist gegen einen Austritt von Temperierflüssigkeit, aus dem Umgehäuse abgedichtet. Damit bringt ein erfindungsgemäßes Umgehäuse die gleichen Vorteile mit sich, wie sie ausführlich mit Bezug auf eine erfindungsgemäße Batterievorrichtung erläutert worden sind.

Ein weiterer Gegenstand der vorliegenden Erfindung ist ein Verfahren für die Montage einer erfindungsgemäßen Batterievorrichtung, aufweisend die folgenden Schritte:
- Einsetzen wenigstens eines Batteriemoduls in den Modulraum eines Umgehäuses gemäß der vorliegenden Erfindung,
- flüssigkeitsdichtes Schließen des Modulraums gegen einen Austritt von Temperierflüssigkeit, aus dem Umgehäuse.

Durch die Ausbildung einer erfindungsgemäßen Batterievorrichtung bringt ein erfindungsgemäßes Verfahren die gleichen Vorteile mit sich, wie sie ausführlich mit Bezug auf eine erfindungsgemäße Batterievorrichtung erläutert worden sind.

Ein erfindungsgemäßes Verfahren lässt sich dahingehend weiterbilden, dass vor dem Schließen des Modulraums ein noch vorhandener Freiraum zwischen einer Innenwandung des Umgehäuses und dem wenigstens einen Batteriemodul mit einem Verdrängungsmaterial zumindest teilweise gefüllt wird. Zu dem Verdrängungsmaterial und den Vorteilen wurde ebenfalls ausführlich mit Bezug auf eine entsprechende Ausführungsform der Batterievorrichtung erläutert.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: die Ausführungsform einer erfindungsgemäßen Batterievorrichtung bei einem ersten Montageschritt,
- Fig. 2: die Ausführungsform der Fig. 1 bei einem weiteren Montageschritt,
- Fig. 3: die Ausführungsform der Fig. 1 und 2 nach Beendigung der Montage und
- Fig. 4: eine weitere Ausführungsform einer erfindungsgemäßen Batterievorrichtung.

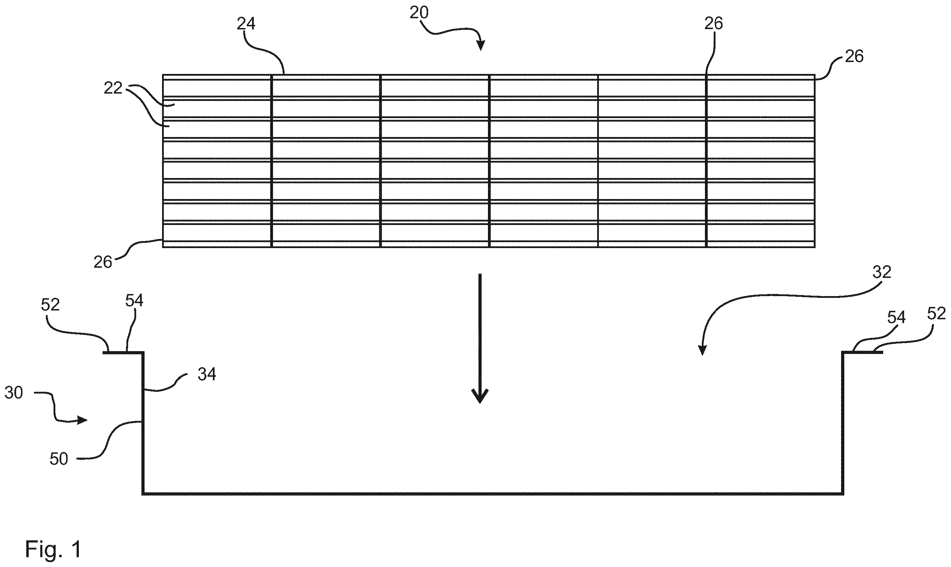

Anhand der Figuren 1 bis 3 wird ein erfindungsgemäßes Verfahren zur Herstellung einer Batterievorrichtung 10 nach der vorliegenden Erfindung dargestellt. In der Fig. 1 ist zu erkennen, dass ein Wannenabschnitt 50 eines mehrteilig ausgebildeten Umgehäuses 10 vorgesehen ist. Dieser Wannenabschnitt 50 definiert bereits einen Großteil des Aufnahmeraums 32 des Umgehäuses 30. In diesem Modulraum 32 kann nun ein Batteriemodul 20 von oben entlang der Pfeilrichtung gemäß Fig. 1 eingesetzt werden.

In Fig. 1 ist auch gut zu erkennen, dass das hier dargestellte Batteriemodul 20 mit einem Modulgehäuse 24 ausgestattet ist. Das Modulgehäuse 24 umgibt dabei eine Vielzahl von einzelnen Batteriezellen 22, welche wiederum von links nach rechts angeordnet in einzelnen Ebenen getrennt voneinander verbundenen bzw. angeordnet sind. Um sicherzustellen, dass Temperierflüssigkeit, welche zur Temperierung der einzelnen Batteriezellen 22 innerhalb des Modulgehäuses 24 angeordnet ist, nicht austritt, sind an den einzelnen Nahtstellen zwischen den Ebenen sowie an den Endpunkten des Modulgehäuses 24 einzelne Dichtelemente einer primären Dichtvorrichtung 26 angeordnet. In der Fig. 1 ist schematisch die jeweilige Stelle links und rechts am Ende des Modulgehäuses 24 sowie eine Nahtstelle beispielhaft zwischen der rechten und der vorletzten Ebene der Batteriezellen 22 dargestellt. Selbstverständlich sind auch an allen anderen Nahtstellen entsprechende Dichtmittel zur Ausbildung der primären Dichtvorrichtung 26 vorgesehen.

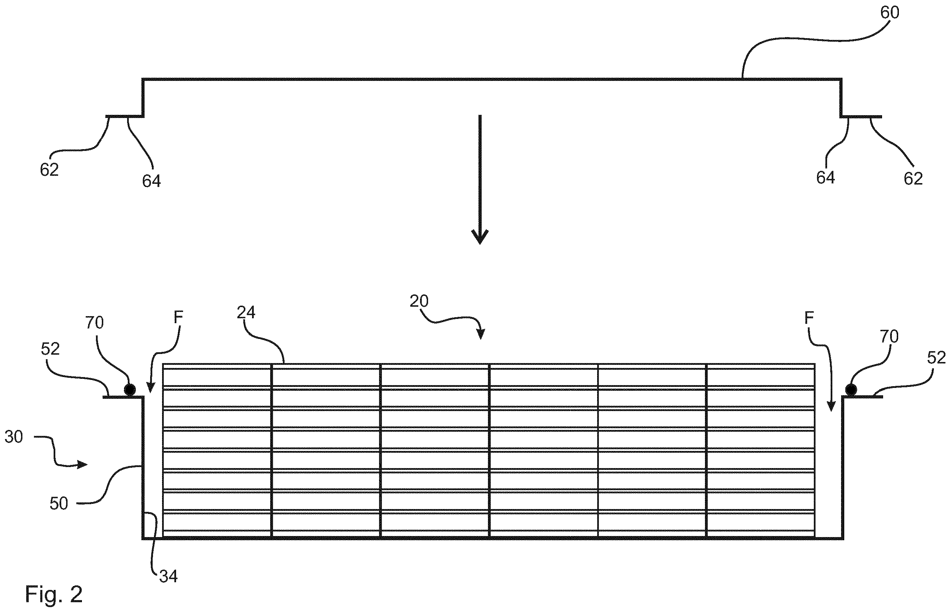

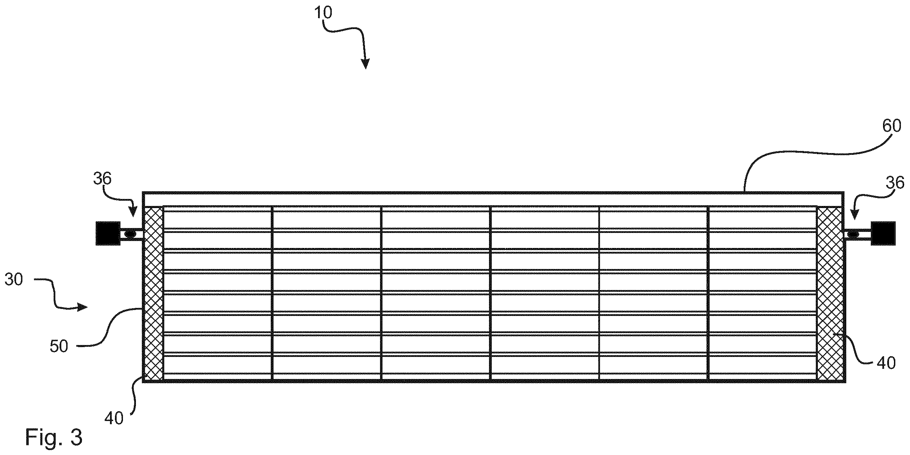

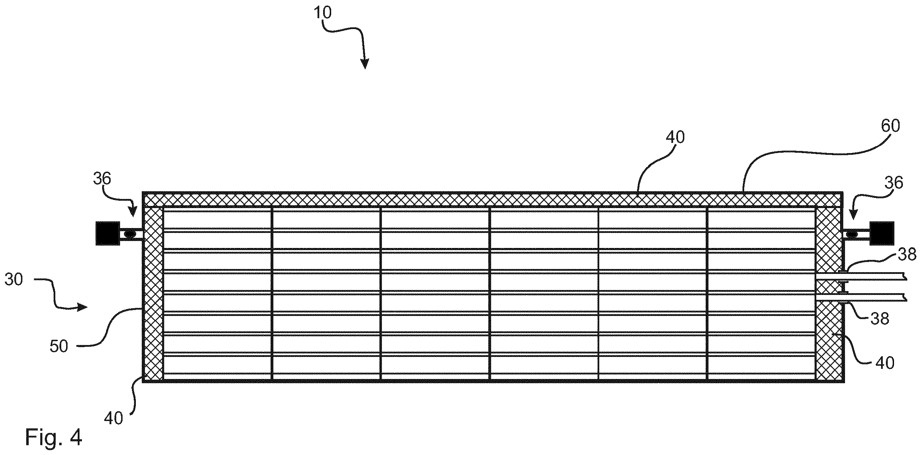

Nach dem Einsetzen des Batteriemoduls 20 in die Position, wie sie die Fig. 2 zeigt, bleibt ein Freiraum F auf der linken und der rechten Seite zwischen dem Batteriemodul 20 und der Innenwandung 34 des Umgehäuses 30 bestehen. Dieser Freiraum F wird nun ausgefüllt mit einem Verdrängungsmaterial 40, wie es später in den Fig. 3 und 4 noch näher erläutert wird.

Zur weiteren Ausbildung einer sekundären Dichtvorrichtung 36 wird bei dieser Ausführungsform ein separates Dichtmittel 70 auf der Dichtfläche 54 des Wannenabschnitts 50 neben dem Verbindungsabschnitt 52 angeordnet. Anschließend kann der Modulraum 32 dadurch geschlossen werden, dass nun der Deckelabschnitt 60 von oben entlang der Pfeilrichtung aufgesetzt wird. Das Ende dieses Vorgangs zeigt beispielsweise die Fig. 3. Der Deckelabschnitt 60 ist nun aufgesetzt und schließt den Modulraum 32 ab, in welchen nicht nur das Batteriemodul 20, sondern links und rechts auch das Verdrängungsmaterial 40, hier vorzugsweise in Form eines Schaumaterials mit zumindest teilweise geschlossenen Schaumporen, ausgefüllt bzw. eingebracht ist. Das Umgehäuse 30 ist damit geschlossen und ist links und rechts in irreversibler Weise zwischen Verbindungsabschnitt 52 und Gegen-Verbindungsabschnitt 62 abgeschlossen. Um die Dichtwirkung der sekundären Dichtvorrichtung 36 gewährleisten zu können, ist hier zusätzlich durch entsprechende Quetschung das Dichtmittel 70 mit einer gewünschten Dichtkraft beaufschlagt.

Die Fig. 4 ist eine weitere Ausführungsform einer erfindungsgemäßen Batterievorrichtung 10. Ausgehend von der Ausführungsform der Fig. 3 ist auch ein oben noch vorhandener Freiraum F mit Verdrängungsmaterial 40 ausgestattet. Darüber hinaus ist für eine Zuführung bzw. eine Ableitung von Medien, Daten oder elektrischer Leistung ein Durchgang in Form von zwei Funktionsdurchgängen 38 auf der rechten Seite des Wannenabschnitts 50 des Umgehäuses 30 zu erkennen. Die sekundäre Dichtvorrichtung 36 erstreckt sich vorzugsweise auch auf diese Funktionsdurchgänge 38, so dass auch hier eine wirkungsvolle Abdichtung gegen ein unerwünschtes Austreten der Temperierflüssigkeit, aus dem Umgehäuse 30 sichergestellt ist.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichen

- 10: Batterievorrichtung
- 20: Batteriemodul
- 22: Batteriezelle
- 24: Modulgehäuse
- 26: primäre Dichtvorrichtung
- 30: Umgehäuse
- 32: Modulraum
- 34: Innenwandung
- 36: sekundäre Dichtvorrichtung
- 38: Funktionsdurchgang
- 40: Verdrängungsmaterial
- 50: Wannenabschnitt
- 52: Verbindungsabschnitt
- 54: Dichtfläche
- 60: Deckelabschnitt
- 62: Gegen-Verbindungsabschnitt
- 64: Gegen-Dichtfläche
- 70: Dichtmittel

- F: Freiraum

## Patentansprüche

1. Batterievorrichtung (10) für ein elektrisch angetriebenes Fahrzeug, aufweisend wenigstens ein Batteriemodul (20) mit einer Mehrzahl von einzelnen Batteriezellen (22), wobei das Batteriemodul (20) ein Modulgehäuse (24) aufweist, welches zur Temperierung der Batteriezellen (22) zumindest teilweise mit Temperierflüssigkeit gefüllt ist und eine primäre Dichtvorrichtung (26) gegen einen Austritt der Temperierflüssigkeit aus dem Modulgehäuse (24) aufweist und wobei die Batteriezellen (22) in dem Modulgehäuse angeordnet sind, wobei weiter das Batteriemodul (20) in einem Modulraum (32) eines Umgehäuses (30) aufgenommen ist, welches eine sekundäre Dichtvorrichtung (36) gegen einen Austritt von Temperierflüssigkeit aus dem Umgehäuse (30) aufweist.

2. Batterievorrichtung (10) nach Anspruch 1, **dadurch gekennzeichnet, dass** zwischen dem wenigstens einen Batteriemodul (20) und einer Innenwandung (34) des Umgehäuses (30) ein Freiraum (F) ausgebildet ist, welcher zumindest teilweise, insbesondere vollständig oder im Wesentlichen vollständig mit einem Verdrängungsmaterial (40) gefüllt ist.

3. Batterievorrichtung (10) nach Anspruch 2, **dadurch gekennzeichnet, dass** das Verdrängungsmaterial (40) ein Schaummaterial aufweist, insbesondere mit zumindest teilweise geschlossenen Schaumporen.

4. Batterievorrichtung (10) nach einem der Ansprüche 2 oder 3, **dadurch gekennzeichnet, dass** das Verdrängungsmaterial (40) eine Flüssigkeit aufweist, insbesondere die Temperierflüssigkeit.

5. Batterievorrichtung (10) nach einem der Ansprüche 2 bis 4, **dadurch gekennzeichnet, dass** das Verdrängungsmaterial (40) einen Feststoff aufweist, insbesondere in Form eines Schüttgutes.

6. Batterievorrichtung (10) nach einem der vorangegangenen Ansprüche, **dadurch gekennzeichnet, dass** das Umgehäuse (30) wenigstens zweiteilig ausgebildet ist und einen Wannenabschnitt (50) mit einem Verbindungsabschnitt (52) sowie einen Deckelabschnitt (60) mit einem Gegen-Verbindungsabschnitt (62) aufweist, wobei das wenigstens eine Batteriemodul (20) in dem Wannenabschnitt (50) aufgenommen ist und der Deckelabschnitt (60) über seinen Gegen-Verbindungsabschnitt (62) mit dem Verbindungsabschnitt (52) flüssigkeitsdicht verbunden ist.

7. Batterievorrichtung (10) nach Anspruch 6, **dadurch gekennzeichnet, dass** der Wannenabschnitt (50) eine Dichtfläche (54) und der Deckelabschnitt (60) eine Gegen-Dichtfläche (64) aufweist, welche miteinander, insbesondere über eine separates Dichtmittel (70), in flüssigkeitsabdichtendem Kontakt stehen.

8. Batterievorrichtung (10) nach einem der Ansprüche 6 oder 7, **dadurch gekennzeichnet, dass** der Verbindungsabschnitt (52) mit dem Gegen-Verbindungsabschnitt (62) reversibel oder irreversibel verbunden ist.

9. Batterievorrichtung (10) nach einem der vorangegangenen Ansprüche, **dadurch gekennzeichnet, dass** das Umgehäuse (30) wenigstens einen Funktionsdurchgang (38) aufweist für die Durchführung wenigstens eines Funktionsmittels in den Modulraum (32) des Umgehäuses (30), insbesondere für wenigstens eines der folgenden Funktionsmittel:
- Elektrische Verbindungsleitung zu dem wenigstens einen Batteriemodul (20)
- Flüssigkeitsleitung für Temperierflüssigkeit zu dem wenigstens einen Batteriemodul (20)
- Datenleitung zu dem wenigstens einen Batteriemodul (20)

10. Batterievorrichtung (10) nach einem der vorangegangenen Ansprüche, **dadurch gekennzeichnet, dass** das Umgehäuse (30) wenigstens abschnittsweise mechanisch stabil ausgebildet ist.

11. Umgehäuse (30) für eine Batterievorrichtung (10) mit den Merkmalen eines der Ansprüche 1 bis 10, aufweisend eine Innenwandung (34), welche einen Modulraum (32) zur Aufnahme wenigstens eines Batteriemoduls (20) umgibt und gegen den einen Austritt von Temperierflüssigkeit aus dem Umgehäuse (30) abgedichtet ist.

12. Verfahren für die Montage einer Batterievorrichtung (10) mit den Merkmalen eines der Ansprüche 1 bis 10, aufweisend die folgenden Schritte:
- Einsetzen wenigstens eines Batteriemoduls (20) in den Modulraum (32) eines Umgehäuses (30) mit den Merkmalen des Anspruchs 11,
- Flüssigkeitsdichtes Schließen des Modulraums (32) gegen einen Austritt von Temperierflüssigkeit aus dem Umgehäuse (30).

13. Verfahren nach Anspruch 12, **dadurch gekennzeichnet, dass** vor dem Schließen des Modulraums (32) ein noch vorhandener Freiraum (F) zwischen einer Innenwandung (34) des Umgehäuses (30) und dem wenigstens einen Batteriemodul (20) mit einem Verdrängungsmaterial (40) zumindest teilweise gefüllt wird.

## Claims

1. Battery device (10) for an electrically driven vehicle, having at least one battery module (20) with a plurality of individual battery cells (22), the battery module (20) having a module housing (24) which is at least partially filled with tempering fluid for tempering the battery cells (22) and has a primary sealing device (26) to prevent the tempering fluid from escaping from the module housing (24), the battery module (20) also being accommodated in a module space (32) of a housing (30) which has a secondary sealing device (36) to prevent tempering fluid from escaping from the enclosure (30).

2. Battery device (10) according to claim 1, **characterized in that** a free space (F) is formed between the at least one battery module (20) and an inner wall (34) of the enclosure (30), which free space is at least partially, in particular completely or substantially completely, filled with a displacement material (40).

3. Battery device (10) according to claim 2, **characterized in that** the displacement material (40) comprises a foam material, in particular with at least partially closed foam pores.

4. Battery device (10) according to any one of claims 2 or 3, **characterized in that** the displacement material (40) comprises a liquid, in particular the tempering fluid.

5. Battery device (10) according to any one of claims 2 to 4, **characterized in that** the displacement material (40) comprises a solid, in particular in the form of a bulk material.

6. Battery device (10) according to any one of the preceding claims, **characterized in that** the enclosure (30) is formed in at least two parts and comprises a tub portion (50) having a connecting portion (52) and a cover portion (60) having a mating connecting portion (62), the at least one battery module (20) being received in the tub portion (50) and the cover portion (60) being connected to the connecting portion (52) in a liquid-tight manner via its mating connecting portion (62).

7. Battery device (10) according to claim 6, **characterized in that** the tub portion (50) has a sealing surface (54) and the cover portion (60) has a counter-sealing surface (64), which are in liquid-sealing contact with one another, in particular via a separate sealing means (70).

8. Battery device (10) according to any one of claims 6 or 7, **characterized in that** the connecting portion (52) is reversibly or irreversibly connected to the mating connecting portion (62).

9. Battery device (10) according to one of the preceding claims, **characterized in that** the enclosure (30) comprises at least one functional passage (38) for the passage of at least one functional means into the module space (32) of the enclosure (30), in particular for at least one of the following functional means:
- Electrical connection line to the at least one battery module (20)
- Liquid line for tempering fluid to the at least one battery module (20)
- Data line to the at least one battery module (20)

10. Battery device (10) according to any one of the preceding claims, **characterized in that** the enclosure (30) is designed to be mechanically stable at least in sections.

11. Enclosure (30) for a battery device (10) having the features of any one of claims 1 to 10, comprising an inner wall (34) which surrounds a module space (32) for receiving at least one battery module (20) and is sealed against the escape of tempering fluid from the enclosure (30).

12. Method of assembling a battery device (10) having the features of any one of claims 1 to 10, comprising the steps of:
- Inserting at least one battery module (20) into the module space (32) of an enclosure (30) having the features of claim 11,
- Liquid-tight closure of the module space (32) to prevent tempering fluid from escaping from the enclosure (30).

13. Method according to claim 12, **characterized in that,** before closing the module space (32), a remaining free space (F) between an inner wall (34) of the enclosure (30) and the at least one battery module (20) is at least partially filled with a displacement material (40).

## Revendications

1. Dispositif de batterie (10) pour un véhicule à entraînement électrique, comprenant au moins un module de batterie (20) avec une pluralité de cellules de batterie individuelles (22), le module de batterie (20) comprenant un boîtier de module (24), qui est au moins partiellement rempli d'un fluide de tempérage pour tempérer les cellules de batterie (22) et comprenant un dispositif d'étanchéité primaire (26) pour empêcher le fluide de tempérage de s'échapper du boîtier de module (24), le module de batterie (20) étant également logé dans un espace de module (32) d'un logement (30) comprenant un dispositif d'étanchéité secondaire (36) pour empêcher le fluide de tempérage de s'échapper du logement (30).

2. Dispositif de batterie (10) selon la revendication 1, **caractérisé en ce qu'**un espace libre (F) est formé entre le au moins un module de batterie (20) et une paroi intérieure (34) du logement (30), lequel espace libre (F) est au moins partiellement, en particulier complètement ou sensiblement complètement rempli d'un matériau de déplacement (40).

3. Dispositif de batterie (10) selon la revendication 2, **caractérisé en ce que** le matériau de déplacement (40) comprend un matériau en mousse, en particulier avec des pores de mousse au moins partiellement fermés.

4. Dispositif de batterie (10) selon l'une des revendications 2 ou 3, **caractérisé en ce que** le matériau de déplacement (40) comprend un liquide, notamment le fluide de tempérage.

5. Dispositif de batterie (10) selon l'une quelconque des revendications 2 à 4, **caractérisé en ce que** le matériau de déplacement (40) comprend un solide, notamment sous la forme d'un matériau en vrac.

6. Dispositif de batterie (10) selon l'une quelconque des revendications précédentes, **caractérisé en ce que** le logement (30) est réalisé en au moins deux parties et comprend une section de cuve (50) avec une section de raccordement (52) ainsi qu'une section de couvercle (60) avec une section de raccordement opposée (62), le au moins un module de batterie (20) étant logé dans la section de cuve (50) et la section de couvercle (60) étant reliée à la section de raccordement (52) de manière étanche aux liquides par sa section de raccordement opposée (62).

7. Dispositif de batterie (10) selon la revendication 6, **caractérisé en ce que** la section de cuve (50) présente une surface d'étanchéité (54) et la section de couvercle (60) présente une surface de contre-étanchéité (64), qui sont en contact d'étanchéité aux liquides l'une avec l'autre, en particulier par l'intermédiaire d'un moyen d'étanchéité séparé (70).

8. Dispositif de batterie (10) selon l'une quelconque des revendications 6 ou 7, **caractérisé en ce que** la section de raccordement (52) est connectée de manière réversible ou irréversible à la section de raccordement opposée (62).

9. Dispositif de batterie (10) selon l'une quelconque des revendications précédentes, **caractérisé en ce que** le logement (30) présente au moins un passage fonctionnel (38) pour le passage d'au moins un moyen fonctionnel dans l'espace de module (32) du logement (30), notamment pour au moins un des moyens fonctionnels suivants :
- Ligne de connexion électrique à l'au moins un module de batterie (20)
- Ligne de liquide pour le fluide de tempérage vers le au moins un module de batterie (20)
- Ligne de données vers le au moins un module de batterie (20)

10. Dispositif de batterie (10) selon l'une quelconque des revendications précédentes, **caractérisé en ce que** le logement (30) est mécaniquement stable au moins en partie.

11. Logement (30) pour un dispositif de batterie (10) présentant les caractéristiques de l'une quelconque des revendications 1 à 10, avec une paroi intérieure (34) qui entoure un espace de module (32) destiné à recevoir au moins un module de batterie (20) et qui est étanche par rapport à un fluide de tempérage qui s'échappe du logement (30).

12. Procédé d'assemblage d'un dispositif de batterie (10) ayant les caractéristiques de l'une quelconque des revendications 1 à 10, comprenant les étapes suivantes :
- Insertion d'au moins un module de batterie (20) dans l'espace de module (32) d'un logement (30) avec les caractéristiques de la revendication 11,
- Fermeture étanche de l'espace du module (32) pour empêcher le fluide de tempérage de s'échapper du logement (30).

13. Procédé selon la revendication 12, **caractérisé en ce que,** avant la fermeture de l'espace de module (32), un espace libre (F) encore présent entre une paroi intérieure (34) du logement (30) et le au moins un module de batterie (20) est au moins partiellement rempli d'un matériau de déplacement (40).
